## Europäisches Patentamt
## European Patent Office
## Office européen des brevets

(19)

(11) Veröffentlichungsnummer: **0 023 542**
**B1**

(12)

# EUROPÄISCHE PATENTSCHRIFT

(45) Veröffentlichungstag der Patentschrift:
**02.03.83**

(51) Int. Cl.³: **B 41 F  33/00**

(21) Anmeldenummer: **80102923.2**

(22) Anmeldetag: **24.05.80**

(54) **Vorrichtung zum Messen des Anstelldruckes zwischen zwei Schmitzringen.**

(30) Priorität: **21.07.79  DE 2929605**

(43) Veröffentlichungstag der Anmeldung:
**11.02.81 Patentblatt 81/6**

(45) Bekanntmachung des Hinweises auf die Patenterteilung:
**02.03.83 Patentblatt 83/9**

(84) Benannte Vertragsstaaten:
**CH DE FR GB LI**

(56) Entgegenhaltungen:
**DE-A-1 944 446**
**DE-A-2 300 946**
**DE-B-1 042 923**

(73) Patentinhaber: **M.A.N.-ROLAND Druckmaschinen Aktiengesellschaft, Christian-Pless-Strasse 6-30, D-6050 Offenbach/Main (DE)**

(72) Erfinder: **Fischer, Hermann, Pferseerstrasse 15, D-8900 Augsburg (DE)**

BUNDESDRUCKEREI BERLIN

Vorrichtung zum Messen des Anstelldruckes zwischen zwei Schmitzringen

Die Erfindung betrifft eine Vorrichtung zum Messen des Anstelldruckes zweier unter Verwendung von Schmitzringen gegeneinanderlaufender Druckwerkzylinder einer Rotations-Druckmaschine durch Aufbringen einer definierten Gegenkraft.

Eine Vorrichtung zum Messen der Vorspannung zweier Arbeitszylinder einer Rotations-Druckmaschine ist bereits aus der DE-Auslegeschrift 23 00 946 bekannt. Diese besteht aus zwei parallelen Meßwalzen mit unterschiedlichem, aber wesentlich kleinerem Durchmesser als dem Durchmesser der Arbeitszylinder, die seitlich in den Spalt zwischen den Schmitzringen der Arbeitszylinder hintereinander einbringbar sind, wobei der Abstand der Mittelachsen der beiden Meßwalzen meßbar ist. Die Messung erfolgt mittels einer Meßuhr, die an der größeren der beiden Meßwalzen befestigt ist und mit ihrem Meßfuß auf die kleinere Meßwalze tastet.

In der Zeitschrift »IPM-Mitteilungen« ist ferner in Jahrgang 7, Heft 5 vom November 1965 auf den Seiten 217 bis 228, insbesondere auf den Seiten 219 und 220, ein Kraftmeßgerät zur Bestimmung der Anpreßkraft zwischen zwei Druckwerkzylindern beschrieben, das aus zwei an ihren Enden über schmale dünne Stege miteinander verbundenen Keilen besteht, welche zum Auseinanderdrücken der beiden Druckwerkzylinder hydraulisch aneinander preßbar sind. Der bis zum Abheben der beiden Druckwerkzylinder erforderliche Hydraulikdruck ist dann ein direktes Maß für den Anpreßdruck zwischen den Druckwerkzylindern. Durch die besondere Bauart mit zwei voneinander abgesetzten Verbindungsstegen ist dieses Kraftmeßgerät an sich auch für die Verwendung für Messungen an Schmitzringen geeignet. Diese bekannte Vorrichtung hat jedoch den Nachteil, daß sich die Keile bei der Messung infolge der auftretenden außerordentlich hohen Kräfte in der Größenordnung von mehreren Tonnen, d. h. einigen hundert KN, schon merklich in die Oberfläche der Druckwerkzylinder bzw. der Schmitzringe eindrücken, so daß einmal das Meßergebnis verfälscht und zum anderen die betreffenden Oberflächen beschädigt werden.

Des weiteren weisen die beiden vorangehend beschriebenen bekannten Vorrichtungen den Nachteil auf, daß eine Messung ohne methodischen Meßfehler nur bei einer (nie erreichbaren) Null-Toleranz der Zylinder oder Meßringe möglich ist.

Der vorliegenden Erfindung liegt die Aufgabe zugrunde, eine Vorrichtung zum Messen des Anstelldruckes zwischen zwei unter Verwendung von Schmitzringen gegeneinanderlaufenden Druckwerkzylindern einer Rotations-Druckmaschine aufzuzeigen, die ohne fälschende oder schädigende Verformung und ohne enge Tolerierung der aneinander angestellten Oberflächen eine exakte und objektive Messung ermöglicht.

Diese Aufgabe wird gemäß dem Kennzeichen des Patentanspruchs 1 gelöst. Weiterbildungen der Erfindung ergeben sich aus den Unteransprüchen in Verbindung mit der Beschreibung und den Zeichnungen.

Ein wesentlicher Vorteil der erfindungsgemäßen Vorrichtung besteht darin, daß mit ihr exakte Messungen bei bereits einem gewissen Verschleiß unterworfenen Schmitzringen gestattet werden. Außerdem kann sie als eine Baueinheit mit dem Druckwerkzylinder hergestellt werden.

Die Erfindung wird im folgenden anhand eines in den Zeichnungen dargestellten Ausführungsbeispiels im einzelnen erläutert. In diesen zeigt

Fig. 1 eine teilweise geschnittene Seitenansicht und

Fig. 2 eine Vorderansicht eines Ausführungsbeispiels der Erfindung.

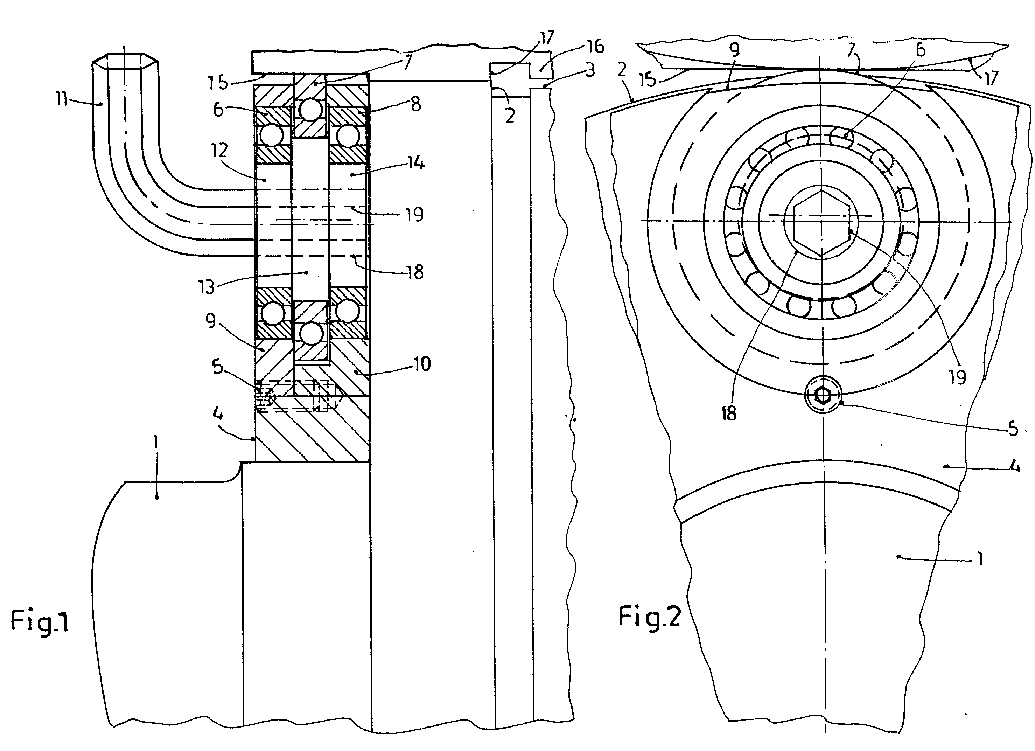

In Fig. 1 ist in Teilansicht ein mit Schmitzringen 2 versehener Druckwerkzylinder 3 dargestellt, der in bekannter Weise parallel zu einem weiteren Druckwerkzylinder 16 angeordnet ist.

Über dem Achsstummel 1 ist ein ringförmiger Spannblock 4 dargestellt. In dem ringförmigen Spannblock 4 sind auf einem Wellenstummel 18 drei Wälzlager 6, 7 und 8 vorgesehen, die jeweils mit ihrem Innenring auf eine der Scheiben 12, 13 und 14 aufgezogen sind. Die Scheiben 12 und 14, die zur Halterung der Wälzlager 6 und 8 dienen, sitzen über zentrischen Bohrungen auf dem Achsstummel 18, während die Scheibe 13 als Exzenterscheibe ausgebildet ist, d. h. sie ist über eine außermittige Bohrung auf den Wellenstummel 18 aufgezogen. Durch die Verwendung einer Exzenterscheibe 13 kann somit durch Drehen des Wellenstummels 18, der in den beiden seitlichen Wälzlagern 6 und 8 geführt ist, das Wälzlager 7 aus der Mantelfläche des Spannblockes 4 bzw. des Schmitzrings 2 in der Weise herausgedreht werden, daß es in Anlage mit dem Spannblock 15 des gegenüberliegenden Zylinders 16 kommt und auf den Spannblock 15 eine Gegenkraft ausüben kann.

Die Außenringe der Wälzlager 6 und 8 sitzen jeweils in einer der Scheiben 9 bzw. 10, die an ihrem oberen Teil abgeflacht sind. Die Scheiben 9 und 10 sind in dem Spannblock 4 durch eine Befestigungsschraube 5 gegen Verdrehung gesichert.

Wie aus Fig. 2 am besten hervorgeht, weist der Wellenstummel 18 eine innere axiale Führung 19 auf, in die ein sechskantförmiger Drehmomentenschlüssel 11 eingesetzt werden kann. Durch diesen Drehmomentenschlüssel 11 kann die Exzenterscheibe 13 und somit das auf dieser angeordnete Wälzlager 7 aus der Mantelfläche des Spannblockes 4 bzw. des Schmitzringes 2 herausgedreht werden, so daß es in Anlage mit dem Spannblock 15 des gegenüberliegenden Zylinders 16 kommt und auf diesen eine Gegenkraft ausübt.

Mit dem Drehmomentenschlüssel 11 kann nun der Zylinder 16, dessen Schmitzring 17 mit einem bestimmten Anstelldruck an den Schmitzring 2 des Zylinders 3 angestellt ist, abgehoben werden. Die dafür erforderliche Gegenkraft ist direkt am Drehmomentenschlüssel ablesbar. Mittels einer zwischen den Schmitzringen 2 und 17 eingeklemmten Folie kann die Ablesung festgelegt werden, und zwar entweder beim Freiwerden der Folie oder wenn mit Hilfe eines Zugmeßgerätes, z. B. einer Federwaage, die Folie mit einer bestimmten Kraft herausziehbar ist.

Eine weitere Meßmöglichkeit besteht darin, daß der äußere, d. h. der obere Rand des Spannblockes 4 mit einer Gradeinteilung versehen wird, welche ein Ablesen des Verdrehwinkels der Exzenterscheibe 13 gestattet.

Es versteht sich, daß die in den Fig. 1 und 2 gezeigte Vorrichtung an der linken Seite des Druckwerkzylinders 3 auch auf der rechten Seite verwendet werden kann.

Ein weiteres Meßverfahren zur Ermittlung des Anstelldruckes der beiden gegeneinanderlaufenden Schmitzringe 2 und 17 besteht darin, daß mit Hilfe eines Verdrehwerkzeuges die Druckwerkzylinder bzw. die Schmitzringe über die Exzenterscheibe 13 bzw. das exzentrisch gelagerte Wälzlager 7 leicht abgehoben werden, so daß eine Folie zwischen die Schmitzringe eingelegt werden kann. Durch Nachlassen der Gegenkraft bzw. der Abhebekraft werden nun die Schmitzringe wieder gegeneinander gestellt, so daß ein Abdruck auf die Folie erzeugt wird, der aussagefähig für den Druck zwischen den Schmitzringen ist.

## Patentansprüche

1. Vorrichtung zum Messen des Anstelldruckes zweier unter Verwendung von Schmitzringen gegeneinanderlaufender Druckwerkzylinder einer Rotations-Druckmaschine durch Aufbringen einer beim Abheben der beiden Zylinder gemessenen Gegenkraft, dadurch gekennzeichnet, daß zumindest an einer dem Druckwerkzylinder (3) abgewandten Stirnseite eines Schmitzringes (2) in einem Spannblock (4) ein exzentrisches Element (13) drehbar gelagert ist, das soweit aus der Mantelfläche des Schmitzringes (2) herausschwenkbar ist, daß es mit dem Spannblock (15) des gegenüberliegenden Druckwerkzylinders (16) in Berührung kommt und auf diesen die Gegenkraft auszuüben vermag.

2. Vorrichtung nach Anspruch 1, dadurch gekennzeichnet, daß das Element (13) aus einer auf einem Wellenstummel (18) drehfest gelagerten Exzenterscheibe besteht, auf dem ein Wälzlager (7) mit seinem Innenring fixiert ist, und daß der Wellenstummel eine axiale Führung (19) zur Aufnahme eines Verdrehwerkzeuges (11) aufweist.

3. Vorrichtung nach Anspruch 2, dadurch gekennzeichnet, daß der Wellenstummel (18) beiderseits des exzentrisch gelagerten Wälzlagers (7) in zwei weiteren Wälzlagern (6, 8) geführt ist, deren Außenringe durch Scheiben (12, 14) mit dem Spannblock (4) verbunden sind.

4. Vorrichtung nach Anspruch 2 oder 3, dadurch gekennzeichnet, daß die axiale Führung (19) zur Aufnahme des Verdrehwerkzeuges (11) mit direkter Kraftanzeige dient.

5. Vorrichtung nach Anspruch 4, dadurch gekennzeichnet, daß als Verdrehwerkzeug (11) ein Drehmomentenschlüssel vorgesehen ist.

6. Vorrichtung nach einem der vorangehenden Ansprüche, dadurch gekennzeichnet, daß der Spannblock (4) am äußeren Rand mit einer Skala versehen ist, an der der Verdrehwinkel der Exzenterscheibe (13) als normiertes Maß für den Anstelldruck ablesbar ist.

## Claims

1. Device for measuring the adjusting pressure of two printing unit cylinders of a rotary printing press running in opposite directions to one another, using bearing rings, by applying a counter force measured when the two cylinders are lifted, characterised in that at least on one surface of a bearer ring (2) facing away from the printing unit cylinder (3) there is rotatably mounted in a clamping block (4) an eccentric element (13) which can be swung out from the surface of the bearer ring (2) so far that it comes into contact with the clamping block (15) of the opposite printing unit cylinder (16) and can exert the counter force on this.

2. Device according to claim 1, characterised in that the element (13) consists of an eccentric disc mounted rigidly on a stub shaft (18) on which a roller bearing (7) is fixed with its inner ring and that the stub shaft has an axial guideway (19) for receiving a torsion tool (11).

3. Device according to claim 2, characterised in that the stub shaft (18) is guided on both sides of the eccentrically mounted roller bearing (7) in two further roller bearings (6, 8) the outer rings of which are connected to the clamping block (4) by discs (12, 14).

4. Device according to claim 2 or 3, characterised in that the axial guideway (19) is used to receive the torsion tool (11) with direct force indication.

5. Device according to claim 4, characterised in that a torque wrench is provided as a torsion tool (11).

6. Device according to one of the preceding claims, characterised in that the clamping block (4) is provided with a scale on the outer edge, on which scale the angle of torque of the eccentric disc (13) can be read as a standardised measurement for the adjusting pressure.

## Revendications

1. Dispositif pour mesurer la pression de réglage entre deux cylindres d'un groupe imprimant d'une rotative qui tournent à l'encontre l'un de l'autre et comprennent des couronnes de cylindre, et ce, par application d'une force antagoniste mesurée lors d'un dégagement des deux cylindres l'un par rapport à l'autre, caractérisé en ce qu'un élément excentrique (13) est monté mobile en rotation dans un bloc de serrage (4), au moins sur l'une des faces latérales d'une couronne de cylindre (2) opposée au cylindre d'impression (3), élément qui peut être suffisamment écarté par rotation au-delà de la surface extérieure de la courronne de cylindre (2) pour qu'il vienne en contact avec le bloc de serrage (15) du cylindre d'impression opposé (16) et puisse exercer sur ce dernier la force antagoniste.

2. Dispositif selon la revendication 1, caractérisé en ce que l'élément (13) se compose d'un disque excentrique monté fixe en rotation sur un bout d'arbre (18) sur lequel est fixé par sa bague intérieure un palier à roulement (7), et en ce que le bout d'arbre comporte un guidage axial (19) destiné à recevoir un outil d'entraînement en rotation (11).

3. Dispositif selon la revendication 2, caractérisé en ce que le bout d'arbre (18), des deux côtés du palier à roulement (7) monté excentriquement, est guidé dans deux autres paliers à roulement (6, 8) dont les bagues extérieures sont reliées au bloc de serrage par des disques (12, 14).

4. Dispositif selon l'une quelconque des revendications 2 et 3, caractérisé en ce que le guidage axial (19) est destiné à recevoir un outil d'entraînement en rotation (11) à indication directe de la force.

5. Dispositif selon la revendication 4, caractérisé en ce qu'une clef dynamométrique est prévue comme outil d'entraînement en rotation (11).

6. Dispositif selon l'une quelconque des revendications 1 à 5, caractérisé en ce que le bloc de serrage (4) est muni sur son bord extérieur d'une échelle sur laquelle on peut lire l'angle de rotation du disque excentrique (13) qui sert de mesure normalisée pour la pression de réglage.

Fig.1

Fig.2

0 023 542